# EUROPÄISCHE PATENTSCHRIFT

(11) **EP 4 135 914 B1**
(45) Veröffentlichungstag und Bekanntmachung des Hinweises auf die Patenterteilung: **08.11.2023**
(21) Anmeldenummer: 21719074.3
(22) Anmeldetag: 09.04.2021
(51) Int. Cl.: B21B 31/07, F16C 33/00, F16C 13/02, F16C 33/02, F16C 33/10, F16N 29/04

(54) **WALZGERÜST**
ROLL STAND
CAGE DE LAMINOIR

(30) Priorität: 16.04.2020 DE 102020204818; 29.12.2020 DE 102020216586
(43) Veröffentlichungstag der Anmeldung: 22.02.2023
(73) Patentinhaber: SMS Group GmbH, 40237 Düsseldorf (DE)
(72) Erfinder: WILL, Roland, 57482 Wenden (DE); TUCAK, Andrej, 57482 Wenden-Brün (DE)
(74) Vertreter: Kross, Ulrich
(86) Internationale Anmeldenummer: PCT/EP2021/059283
(87) Internationale Veröffentlichungsnummer: WO 2021/209332

(56) Entgegenhaltungen:
- EP-A1- 1 863 603
- EP-A2- 2 764 263
- CN-A- 107 989 914
- JP-A- 2010 112 525
- US-A- 3 934 678

## Beschreibung

Die vorliegende Erfindung betrifft ein Walzgerüst, insbesondere zum Walzen eines Walzgutes, ein Verfahren zum Detektieren von Verunreinigungen eines Öls durch ein Kühlmittel in einem Ölfilmlager eines Walzgerüstes sowie ein Verfahren zum Detektieren von Verlusten eines Öls in einem Ölfilmlager eines Walzgerüstes.

Eine effektive und langlebige Abdichtung von Ölfilmlagern gegen den Austritt von Schmiermittel und/oder Öl als auch gegen das Eindringen von Walzenkühlmittel ist für den wirtschaftlichen Betrieb, die Bandqualität des Walzgutes und vor allem auch aus Umweltschutzgründen von großer Bedeutung. Aufgrund der harschen Betriebsbedingungen ist diese allerdings nicht immer gewährleistet, so dass im Falle eines Versagens Zusatzaufwendungen für ungeplante Walzenwechsel entstehen können.

Aus dem Stand der Technik sind lediglich Überwachungs- und Alarmsysteme bekannt, die auf Basis von Temperatur-, Druck- und Volumenstromdaten eine Auswertung vornehmen, um einen sicheren Betrieb zu gewährleistet. Bei dem aus der EP 1 863 603 A1 bekannten Überwachungs- und Alarmsystem wird ein Schmiermittel aus einem Behälter über Zuführungsleitungen und Zuführungszweigleitungen zu den diversen Ölfilmlagern gepumpt und sodann von den Ölfilmlagern über Ablaufzweigleitungen und Rückführungsleitungen wieder in den Behälter zurückgeführt. Das System umfasst mehrere Sensoren mittels derer der Volumenstrom sowie die Temperatur des Schmiermittels jeweils in den Zuführungs- als auch Ablaufzweigleitungen ermittelt und mittels einer Auswerteeinrichtung ausgewertet wird.

Vor diesem Hintergrund liegt der vorliegenden Erfindung die Aufgabe zu Grunde, ein Walzgerüst sowie ein Verfahren dahingehend weiterzubilden, das ein Detektieren von Verunreinigungen eines Öls und/oder Schmiermittels durch ein Kühlmittel und/oder von Verlusten eines Öls und/oder Schmiermittels in einem Ölfilmlager eines Walzgerüstes frühzeitig erlaubt.

Diese Aufgabe wird erfindungsgemäß durch ein Walzgerüst mit den Merkmalen des Patentanspruchs 1, durch ein Verfahren mit den Merkmalen des Patentanspruchs 9 sowie durch ein Verfahren mit den Merkmalen des Patentanspruchs 10 gelöst.

In einem ersten Aspekt betrifft die vorliegende Erfindung ein Walzgerüst, insbesondere zum Walzen eines Walzgutes, umfassend eine über Ölfilmlager gelagerte Walze, insbesondere eine Stützwalze, wobei das Ölfilmlager ein Dichtungssystem zum Abdichten des Ölfilmlagers gegen ein Ölaustritt sowie ein Kühlmitteleintritt aufweist und in eine Ölumlaufschmieranlage eingebunden ist, die mit dem Ölfilmlager über Öl-Zuführleitungen und Öl-Abführleitung fluidisch verbunden ist.

Das erfindungsgemäße Walzgerüst kennzeichnet sich durch einen in der Öl-Zuführleitung angeordneten ersten Sensor und einen in der Öl-Abführleitung angeordneten zweiten Sensor, wobei die beiden Sensoren dazu eingerichtet sind, den Kühlmittelgehalt in dem jeweiligen Ölvolumenstrom zu ermitteln.

In gleicher Weise sieht die Erfindung ein Verfahren zum Detektieren von Verunreinigungen eines Öls durch ein Kühlmittel in einem Ölfilmlager eines Walzgerüstes vor, wobei das Ölfilmlager ein Dichtungssystem zum Abdichten des Ölfilmlagers gegen ein Ölaustritt sowie ein Kühlmitteleintritt aufweist und in eine Ölumlaufschmieranlage eingebunden ist, die mit dem Ölfilmlager über Öl-Zuführleitungen und Öl-Abführleitung fluidisch verbunden ist, wobei mittels eines ersten, in der Öl-Zuführleitung angeordneten, Sensors und eines zweiten, in der Öl-Abführleitung angeordneten, Sensors der Kühlmittelgehalt in dem jeweiligen Ölvolumenstrom ermittelt wird, und vorzugsweise an eine Auswerteeinrichtung übertragen und von dieser ausgewertet wird.

In einem weiteren Aspekt betrifft die vorliegende Erfindung zudem ein Verfahren zum Detektieren von Verlusten eines Öls in einem Ölfilmlager eines Walzgerüstes, wobei das Ölfilmlager ein Dichtungssystem zum Abdichten des Ölfilmlagers gegen ein Ölaustritt sowie ein Kühlmitteleintritt aufweist und in eine Ölumlaufschmieranlage eingebunden ist, die einen Bevorratungstank mit einem Füllstandssensor umfasst und die mit dem Ölfilmlager über Öl-Zuführleitungen und Öl-Abführleitung fluidisch verbunden ist, wobei mittels eines ersten, in der Öl-Zuführleitung angeordneten, Sensors und eines zweiten, in der Öl-Abführleitung angeordneten, Sensors der Kühlmittelgehalt in dem jeweiligen Ölvolumenstrom ermittelt wird, und vorzugsweise an eine Auswerteeinrichtung übertragen und von dieser ausgewertet wird.

Der vorliegenden Erfindung liegt die wesentliche Erkenntnis zugrunde, dass durch eine kontinuierliche Erfassung und Gegenüberstellung von Kühlmittelgehalten in dem Öl bzw. Schmiermittel, stromab- als auch stromaufwärts des Ölfilmlagers, Ölverunreinigungen durch das Kühlmittel, wie z.B. Wassereinträge, direkt detektiert und ggf. lokalisiert werden können. Ferner können durch eine kontinuierliche Überwachung und Auswertung des Füllstands des Bevorratungstanks sowie unter Berücksichtigung der zuvor ermittelten Schmiermittelverunreinigungen, Verluste des Öls bzw. des Schmiermittels sicher ermittelt werden.

Vorzugsweise umfasst das Walzgerüst hierzu eine Auswerteeinrichtung mittels derer die ermittelten Informationen ausgewertet werden können.

Auf Basis der Messdaten können sodann vordefinierte Maßnahmen für eine Instandhaltung gewonnen werden, so dass eine bedarfsorientierte und zielgerichtete Wartung vorgenommen werden kann. Dies reduziert nicht nur die Wartungs- und Betriebskosten inklusive aufwändiger sowie kostenintensiver Laboranalysen, sondern entlastet zugleich die Umwelt.

Weitere vorteilhafte Ausgestaltungen der Erfindung sind in den abhängig formulierten Ansprüchen angegeben. Die in den abhängig formulierten Ansprüchen einzeln aufgeführten Merkmale sind in technologisch sinnvoller Weise miteinander kombinierbar und können weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Grundsätzlich kann die Messung der Verunreinigungen durch das Kühlmittel, wie z.B. durch Wassereinträge, direkt durchgeführt werden. Aus wirtschaftlichen Gründen wird allerdings eine indirekte Messung bevorzugt. Daher ist vorzugsweise der erste und/oder der zweite Sensor in Form eines Viskositätssensors, eines Leitfähigkeitssensors, eines optischen Sensors und/oder eines Dichtesensors ausgebildet, über den die Kontamination des Öls sodann indirekt detektierbar ist.

Infolge von Materialverschleiß entstehen im Laufe der Zeit axiale Fehlstellungen, die bisher nur durch den Ausbau und Inspektion der einzelnen Komponenten rekonstruiert werden können. Zur Lokalisierung der Fehlerursache ist daher in einer vorteilhaften Ausführungsvariante vorgesehen, dass das Walzgerüst zumindest einen, vorzugsweise induktiven, Abstandssensor umfasst, über den der axiale Abstand zwischen einer walzenballenseitigen Referenzfläche eines Einbaustücks, vorzugsweise eines mit dem Einbaustück verbundenen Ringkanals, und einer zu dem Einbaustück axial gegenüberliegend angeordneten Stirnfläche eines Walzenballens, vorzugsweise eines mit dem Walzenballen verbundenen Abweiserrings, ermittelbar ist. Vorteilhafterweise können die Informationen sodann an eine Auswerteeinrichtung übertragen und von dieser ausgewertet werden. Hierdurch wird eine on-line Überwachung der axialen Positionierung der Walze, insbesondere einer Stützwalze, und eines Lagergehäuse während des Walzbetriebes ermöglicht.

In einer weiteren vorteilhaften Ausführungsvariante ist zur Lokalisierung der Fehlerursache vorgesehen, dass das Walzgerüst zumindest einen innerhalb des Dichtungssystems des Ölfilmlagers angeordneten dritten Sensor umfasst, der besonders bevorzugt zwischen einer öl- und kühlmittelseitigen Dichtung angeordnet ist. Über den dritten Sensor können zusätzlich der Kühlmittelgehalt und/oder Öl- bzw. Schmiermittelgehalt in diesem Bereich ermittelt werden. Auch dieser Sensor kann in Form eines Viskositätssensors, eines Leitfähigkeitssensors, eines optischen Sensors und/oder eines Dichtesensors ausgebildet sein. Besonders bevorzugt ist hierbei vorgesehen, dass der dritte Sensor zwischen zwei Lippen einer Hochleistungszapfendichtung, zwischen zwei Wellendichtringen, zwischen einer Dichtung mit zwei Dichtlippen, und/oder einer Dichtung und einem Labyrinth angeordnet ist, die das Ölfilmlager gegenüber dem Kühlmittel abdichtet. Dabei ist der dritte Sensor ganz besonders bevorzugt am tiefsten Punkt des Dichtungssystems, in einer sog. sechs Uhr-Position, angeordnet.

Da ein zu hohes Öl- bzw. Schmiermittelvolumen innerhalb des Ölfilmlagers eine Undichtigkeit hervorrufen kann, ist in einer weiteren vorteilhaften Ausführungsvariante zur Lokalisierung der Fehlerursache vorgesehen, dass mittels eines innerhalb des Ölfilmlagers angeordneten Füllstandssensors das Füllstandsniveau des Öls im Ölsumpf ermittelt, vorzugsweise an die Auswerteeinrichtung übertragen und von dieser sodann ebenfalls ausgewertet werden kann.

Um ferner frühzeitig einen innerhalb des Ölfilmlagers unzulässig hohen Verschleiß an zumindest einem der Elemente des Lagers ausgewählt aus der Gruppe umfassend eine Zapfenbuchse, einen Druckschulterring, eine Axiallagereinheit und/oder ein Axiallagergehäuse zu identifizieren, und ggf. einen Reparaturhinweis für eine bevorstehende Lagerrevision zu erhalten, umfasst das Walzgerüst vorteilhafterweise an zumindest einem, mehr bevorzugt an jedem der Elemente, eine Messeinrichtung mittels derer der Verschleiß an den axialen Anlageflächen der genannten Elemente zueinander detektierbar ist. Die Messeinrichtung kann beispielsweise in Form eines Sensors ausgebildet sein, der von der Patentinhaberin unter der Produktbezeichnung "Mold Tracker" bekannt ist und vertrieben wird.

Weiterhin kann das System im Kupplungsbereich der und/oder der Öl-Abführleitung eine Messeinrichtung umfassen, mittels derer der korrekte Kupplungsanschluss detektiert werden kann, um diesen zu überwachen. Insbesondere bei der Verwendung einer automatischen Medienkupplung kann beispielsweise über einen elektrischen Kontaktgeber der Kupplungsanschluss wirksam überwacht werden, um die Ölverluste lokal zu identifizieren.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen:
Fig. 1 eine Ausführungsvariante des erfindungsgemäßen Walzgerüstes,
Fig. 2 eine Schnittansicht des Ölfilmlagers mit einer Stützwalze, und
Fig. 3 den in Fig. 2 gekennzeichneten Bereich A in einer vergrößerten Darstellung.

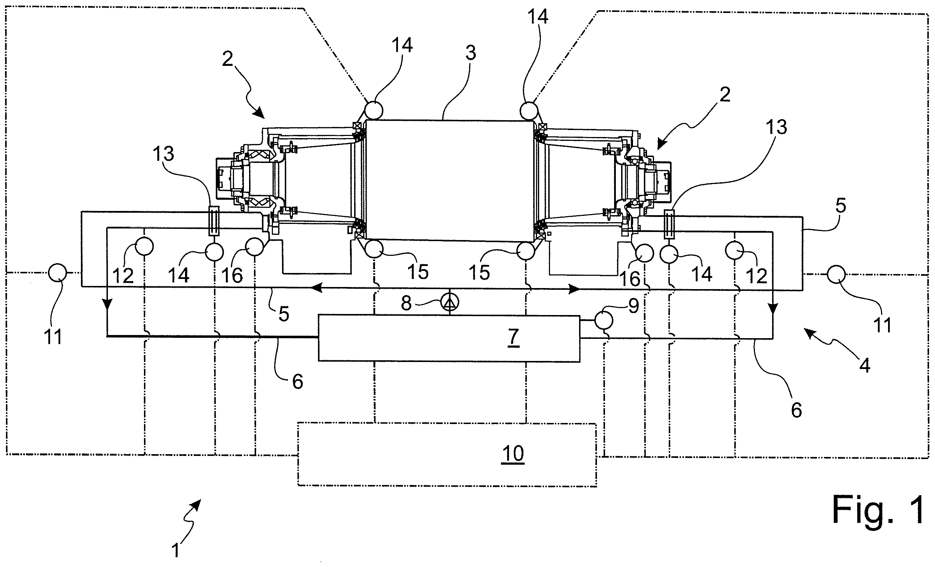

In Figur 1 ist eine Ausführungsvariante des erfindungsgemäßen Walzgerüstes 1 gezeigt, das eine über Ölfilmlager 2 gelagerte Stützwalze 3 aufweist. Beide Ölfilmlager 2 weisen jeweils ein Dichtungssystem zum Abdichten des Ölfilmlagers 2 gegen ein Ölaustritt sowie ein Kühlmitteleintritt auf und sind in eine Ölumlaufschmieranlage 4 eingebunden. Die Ölumlaufschmieranlage 4 ist mit den beiden Ölfilmlagern 2 über Öl-Zuführleitungen 5 und Öl-Abführleitung 6 fluidisch verbunden und weist ferner einen Bevorratungstank 7, eine Pumpe 8 sowie weitere vorliegend nicht dargestellte Einheiten, wie beispielsweise einen Filter, einen Ölkühler, eine Regelstation auf. So kann das Öl mittels der Pumpe 8 über die jeweiligen Zuführleitungen 5 dem jeweiligen Ölfilmlager 2 zugeführt und über Abführleitungen 6 wieder abgeführt werden. Um den Füllstand des Öls in dem Bevorratungstank 7 ermitteln zu können, umfasst dieser einen Füllstandssensor 9, der mit einer Auswerteeinrichtung 10 signaltechnisch verbunden ist und an diese kontinuierlich die Füllstände übermittelt.

Erfindungsgemäß ist vorgesehen, dass das Walzgerüst 1 einen in der Öl-Zuführleitung 5 angeordneten ersten Sensor 11 sowie einen in der Öl-Abführleitung 6 angeordneten zweiten Sensors 12 aufweist, über die der Kühlmittelgehalt in dem jeweiligen Ölvolumenstrom ermittelbar ist. Wie der Figur 1 zu entnehmen ist, sind beide Sensoren 11, 12 ebenfalls mit der Auswerteeinrichtung 10 signaltechnisch verbunden, so dass die ermittelten Informationen an diese übertragbar und von dieser auswertbar sind. Beide Sensoren 11, 12 sind vorliegend in Form eines Viskositätssensors ausgebildet. Alternativ können die beiden Sensoren 11, 12 in Form von Leitfähigkeitssensoren, in Form von optischen Sensoren oder in Form von Dichtesensoren ausgebildet sein.

Ferner umfasst die Öl-Zuführleitung 5 als auch die Öl-Abführleitung 6 in der vorliegend dargestellten Ausführungsvariante eine im Kupplungsbereich 13 angeordnete Messeinrichtung 14, mittels derer die Kupplungsanschlüsse detektierbar sind. Auch die Messeinrichtungen 14, die als elektrische Kontaktgeber ausgebildet sind, sind mit der Auswerteeinrichtung 10 signaltechnisch verbunden.

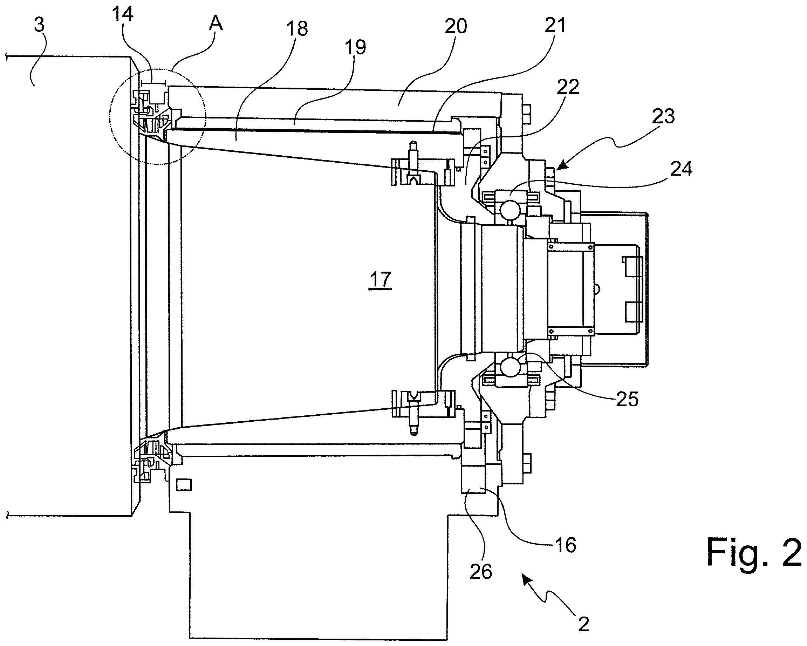

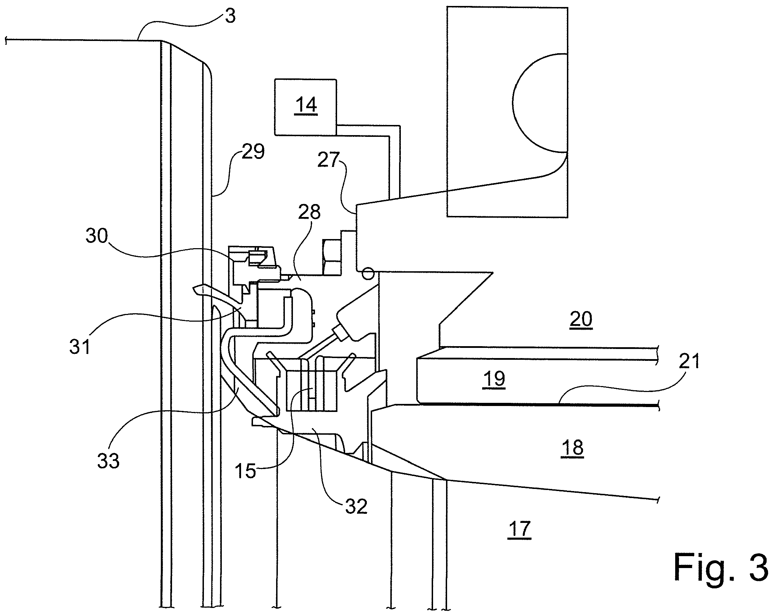

Wie bereits erläutert, können durch eine kontinuierliche Erfassung und Gegenüberstellung von Kühlmittelgehalten in dem Öl stromab- als auch stromaufwärts der Ölfilmlager 2, Ölverunreinigungen durch das Kühlmittel, wie z.B. Wassereinträge, direkt detektiert und ggf. lokalisiert werden. Durch die kontinuierliche Überwachung und Auswertung des Füllstands des Bevorratungstanks 4 sowie unter Berücksichtigung der zuvor ermittelten Ölverunreinigungen, können ferner Verluste des Öls sicher ermittelt werden. Zur Lokalisierung einer Störquelle umfasst das in Figur 1 gezeigte Walzgerüst 1 weitere Sensoren 14, 15, 16 deren Position in Figur 1 angedeutet und ihre Funktion in den nachfolgenden Figuren 2 und 3 näher erläutert wird. Wie anhand der Figur 1 erkennbar, sind auch diese Sensoren 14, 15, 15 signaltechnisch mit der Auswerteeinrichtung 10 verbunden.

Figur 2 zeigt eine Schnittansicht eines der beiden Ölfilmlager 2, in dem die Stützwalze 3 über ihren konisch ausgebildeten Walzenzapfen 17 gelagert ist. Das Ölfilmlager 2 umfasst in der vorliegend dargestellten Ausführungsvariante eine konisch ausgebildete Zapfenbuchse 18, die in einer Lagerbuchse 19 drehbar gelagert ist, wobei die Lagerbuchse 19 wiederrum von einem Einbaustück 20 umfasst ist. Zwischen der stationären Lagerbuchse 19 und der im Walzbetrieb zusammen mit dem Walzenzapfen 17 rotierenden Zapfenbuchse 18 ist typischerweise in der Lastzone ein Schmierfilm 21 ausgebildet.

Das Ölfilmlager 2 ist in der vorliegend dargestellten Ausführungsvariante ferner über einen Druckschulterring 22 mit einer Axiallagereinheit 23 verbunden, die ein Axiallagergehäuse 24 sowie ein Axiallager 25 umfasst.

Wie weiterhin anhand der Figur 2 erkennbar, weist das Walzgerüst 1 einen, innerhalb des Ölfilmlagers 2 angeordneten, weiteren Füllstandssensor 16 auf, über den das Füllstandsniveau 26 des Öls im Schmiermittelsumpf ermittelbar ist.

Figur 3 zeigt den in Figur 2 gekennzeichneten Bereich A in einer vergrößerten Ansicht.

Erkennbar ist in dieser Darstellung zum einen der am Einbaustück 20 fest verbundene Abstandssensor 14, über den der axiale Abstand zwischen einer walzenballenseitigen Referenzfläche 27 des Einbaustücks 20, insbesondere eines mit dem Einbaustück 20 verbundenen Ringkanals 28, und der dem Einbaustück 20 axial gegenüberliegend angeordneten Stirnfläche 29 des Walzenballens der Stützwalze 3, insbesondere eines mit dem Walzenballen verbundenen Abweiserrings 30, ermittelbar ist. Das Ölfilmlager 2 ist an dieser Stelle über eine zwischen dem Ringkanal 28 und dem Abweiserring 30 angeordnete Dichtlippe 31 gegenüber dem Kühlmittel abgedichtet. Über die Messung des axialen Abstands kann sodann die Position der Dichtlippe 31 gegenüber der zugehörigen Gegenlauffläche kontinuierlich überwacht werden.

Das Ölfilmlager 2 umfasst in der vorliegenden Ausführungsvariante ferner eine Hochleistungszapfendichtung 32, die zwischen einer Innenringfläche 33 des Ringkanals 28 und dem Walzenzapfen 17 angeordnet ist und das Ölfilmlager 2 gegenüber einem Kühlmittelein- und Ölaustritt abdichtet. Um einen etwaigen Medienaustausch zwischen der Öl- und der Kühlmittelseite festzustellen, weist das Ölfilmlager 2 den dritten Sensor 15 auf, der zwischen der öl- und kühlmittelseitigen Dichtlippe vorteilhafterweise am tiefsten Punkt des Dichtungssystems, bevorzugt in einer sog. 6 Uhr-Position, angeordnet ist. Der dritte Sensor 15 kann in Form eines Viskositätssensors, eines optischen Sensors, eines Leitfähigkeitssensors, und/oder eines Dichtesensors ausgebildet sein.

### Bezugszeichenliste

- 1: Walzgerüst
- 2: Ölfilmlager
- 3: Stützwalze
- 4: Ölumlaufschmieranlage
- 5: Zuführleitung
- 6: Abführleitung
- 7: Bevorratungstank
- 8: Pumpe
- 9: Füllstandssensor
- 10: Auswerteeinrichtung
- 11: erster Sensor
- 12: zweiter Sensor
- 13: Kupplungsbereich
- 14: Abstandssensor
- 15: dritter Sensor
- 16: (zweiter) Füllstandssensor
- 17: Walzenzapfen
- 18: Zapfenbuchse
- 19: Lagerbuchse
- 20: Einbaustück
- 21: Schmierfilm
- 22: Druckschulterring
- 23: Axiallagereinheit
- 24: Axiallagergehäuse
- 25: Axiallager
- 26: Füllstandsniveau des Öls
- 27: Referenzfläche
- 28: Ringkanal
- 29: Stirnfläche
- 30: Abweiserring
- 31: Dichtlippe
- 32: Hochleistungszapfendichtung
- 33: Innenringfläche

## Patentansprüche

1. Walzgerüst (1), umfassend eine über Ölfilmlager (2) gelagerte Walze (3), insbesondere eine Stützwalze, wobei das Ölfilmlager (2) ein Dichtungssystem zum Abdichten des Ölfilmlagers (2) gegen einen Ölaustritt sowie einen Kühlmitteleintritt aufweist und in eine Ölumlaufschmieranlage (4) eingebunden ist, die mit dem Ölfilmlager (2) über Öl-Zuführleitungen (5) und Öl-Abführleitung (6) fluidisch verbunden ist, sowie einen in der (5) angeordneten ersten Sensor (11) und einen in der Öl-Abführleitung (6) angeordneten zweiten Sensor (12),
**dadurch gekennzeichnet, dass**
die beiden Sensoren (11, 12) dazu eingerichtet sind, den Kühlmittelgehalt in dem jeweiligen Ölvolumenstrom zu ermitteln.

2. Walzgerüst (1) nach Anspruch 1, wobei der erste und/oder der zweite Sensor (11, 12) in Form eines Viskositätssensors, eines Leitfähigkeitssensors, eines optischen Sensors und/oder eines Dichtesensors ausgebildet ist.

3. Walzgerüst (1) nach Anspruch 1 oder 2, wobei die Ölumlaufschmieranlage (4) einen Bevorratungstank (7) mit einem Füllstandssensor (9) umfasst.

4. Walzgerüst (1) nach einem der vorhergehenden Ansprüche, weiter umfassend einen Abstandssensor (14), über den der axiale Abstand zwischen einer Walzenballen-seitigen Referenzfläche (27) eines Einbaustücks (20), vorzugsweise eines mit dem Einbaustück (20) verbundenen Ringkanals (28), und einer zu dem Einbaustück (20) axial gegenüberliegend angeordneten Stirnfläche (29) eines Walzenballens, vorzugsweise eines mit dem Walzenballen verbundenen Abweiserrings (30) ermittelbar ist.

5. Walzgerüst (1) nach einem der vorhergehenden Ansprüche, weiterhin umfassend einen innerhalb des Dichtungssystems angeordneten dritten Sensor (15), der vorzugsweise in dem Ölfilmlager (2) zwischen einer öl- und kühlmittelseitigen Dichtung angeordnet ist.

6. Walzgerüst (1) nach einem der vorhergehenden Ansprüche, weiter umfassend einen innerhalb des Ölfilmlagers (2) angeordneten Füllstandssensor (16), über den das Füllstandsniveau des Öls im Ölsumpf ermittelbar ist.

7. Walzgerüst (1) nach einem der vorhergehenden Ansprüche, wobei das Ölfilmlager (2) eine Messeinrichtung umfasst, über die innerhalb des Ölfilmlagers (2) von zumindest einem, vorzugsweise jedem, der Elemente ausgewählt aus der Gruppe umfassend Zapfenbuchse (18), Druckschulterring (22), Axiallagereinheit (23) und/oder Axiallagergehäuse (24) der Zustand ermittelbar ist.

8. Walzgerüst (1) nach einem der vorhergehenden Ansprüche, weiter umfassend eine im Kupplungsbereich (13) der (5) und/oder der Öl-Abführleitung (6) angeordnete Messeinrichtung, über die der Kupplungsanschluss detektierbar ist.

9. Verfahren zum Detektieren von Verunreinigungen eines Öls durch ein Kühlmittel in einem Ölfilmlager (2) eines Walzgerüstes (1), wobei das Ölfilmlager (2) ein Dichtungssystem zum Abdichten des Ölfilmlagers (2) gegen einen Ölaustritt sowie einen Kühlmitteleintritt aufweist und in eine Ölumlaufschmieranlage (4) eingebunden ist, die mit dem Ölfilmlager (2) über Öl-Zuführleitungen (5) und Öl-Abführleitung (6) fluidisch verbunden ist, **dadurch gekennzeichnet, dass** mittels eines ersten, in der (5) angeordneten Sensors (11) und eines zweiten, in der Öl-Abführleitung (6) angeordneten Sensors (12) der Kühlmittelgehalt in dem jeweiligen Ölvolumenstrom ermittelt wird, und vorzugsweise an eine Auswerteeinrichtung (10) übertragen und von dieser ausgewertet wird.

10. Verfahren zum Detektieren von Verlusten eines Öls in einem Ölfilmlager (2) eines Walzgerüstes (1), wobei das Ölfilmlager (2) ein Dichtungssystem zum Abdichten des Ölfilmlagers (2) gegen einen Ölaustritt sowie einen Kühlmitteleintritt aufweist und in eine Ölumlaufschmieranlage (4) eingebunden ist, die einen Bevorratungstank (7) mit einem Füllstandssensor (9) umfasst und die mit dem Ölfilmlager (2) über Öl-Zuführleitungen (5) und Öl-Abführleitung (6) fluidisch verbunden ist, wobei mittels eines ersten, in der (5) angeordneten, Sensors (11) und eines zweiten, in der Öl-Abführleitung (6) angeordneten, Sensors (12) der Kühlmittelgehalt in dem jeweiligen Ölvolumenstrom ermittelt wird, und vorzugsweise an eine Auswerteeinrichtung (10) übertragen und von dieser ausgewertet wird.

## Claims

1. Roll stand (1) comprising a roll (3), particularly a backing roll, mounted by way of an oil film bearing (2), wherein the oil film bearing (2) comprises a sealing system for sealing the oil film bearing (2) against egress of oil as well as ingress of coolant and is incorporated in an oil circulation lubricating installation (4) in fluid connection with the oil film bearing (2) by way of oil feed lines (5) and an oil drain line (6), as well as a first sensor (11) arranged in the oil fee line (5) and a second sensor (12) arranged in the oil drain line (6), **characterised in that**
the two sensors (11, 12) are arranged for the purpose of ascertaining the coolant content in the respective oil volume flow.

2. Roll stand (1) according to claim 1, wherein the first and/or second sensor (11, 12) is constructed in the form of a viscosity sensor, a conductivity sensor, an optical sensor and/or a density sensor.

3. Roll stand (1) according to claim 1 or 2, wherein the oil circulation lubricating installation (4) comprises a storage tank (7) with a filling state sensor (9).

4. Roll stand (1) according to any one of the preceding claims, further comprising a distance sensor (14) by way of which the axial distance between a reference surface (27), which is at the roll circumference side, of a chock (20), preferably an annular channel (28) connected with the chock (20), and an end surface (29), which is arranged to be axially opposite the chock (20), of a roll circumference, preferably a deflector ring (30) connected with the roll circumference, is ascertainable.

5. Roll stand (1) according to any one of the preceding claims, further comprising a third sensor (15) which is arranged within the sealing system and which is preferably present in the oil film bearing (2) between a seal at the oil side and at the coolant side.

6. Roll stand (1) according to any one of the preceding claims, further comprising a filling state sensor (16) which is arranged within the oil film bearing (2) and by way of which the filling state level of the oil in the oil sump is ascertainable.

7. Roll stand (1) according to any one of the preceding claims, wherein the oil film bearing (2) comprises a measuring device by way of which within the oil film bearing (2) the state is ascertainable of at least one, preferably each, of the elements selected from the group comprising journal bush (18), pressure shoulder ring (22), axial bearing unit (23) and/or axial bearing housing (24).

8. Roll stand (1) according to any one of the preceding claims, further comprising a measuring device which is arranged in the coupling region (13) of the oil feed line (5) and/or the oil drain line (6) and by way of which the coupling connection is detectable.

9. Method of detecting contaminations of an oil by a coolant in an oil film bearing (2) of a roll stand (1), wherein the oil film bearing (2) comprises a sealing system for sealing the oil film bearing (2) against egress of oil as well as ingress of coolant and is incorporated in an oil circulation lubricating installation (4) in fluid connection with the oil film bearing (2) by way of oil feed lines (5) and an oil drain line (6),
**characterised in that**
by means of a first sensor (11) arranged in the oil feed line (5) and a second sensor (12) arranged in the oil drain line (6) the coolant content in the respective oil volume flow is ascertained and preferably transmitted to an evaluating device (10) and evaluated by this.

10. Method of detecting losses of an oil in an oil film bearing (2) of a roll stand (1), wherein the oil film bearing (2) comprises a sealing system for sealing the oil film bearing (2) against egress of oil as well as ingress of coolant and is incorporated in an oil circulation lubricating installation (4), which comprises a storage tank (7) with a filling state sensor (9) and which is in fluid connection with the oil film bearing (2) by way of oil feed lines (5) and an oil drain line (6), wherein by means of a first sensor (11) arranged in the oil feed line (5) and a second sensor (12) arranged in the oil drain line (6) the coolant content in the respective oil volume flow is ascertained and preferably transmitted to an evaluating device (10) and evaluated by this.

## Revendications

1. Cage de laminoir (1) comprenant un cylindre (3), en particulier un cylindre d'appui, supporté par des paliers à film d'huile (2), le palier à film d'huile (2) comportant un système d'étanchéité permettant de rendre le palier à film d'huile (2) étanche à une sortie d'huile ainsi qu'à une entrée de fluide de refroidissement et étant intégré dans un système de lubrification par circulation d'huile (4), qui est en communication fluidique avec le palier à film d'huile (2) au moyen de conduites d'alimentation en huile (5) et de conduites d'évacuation d'huile (6), ainsi qu'un premier capteur (11) disposé dans la conduite d'alimentation en huile (5) et un second capteur (12) disposé dans la conduite d'évacuation d'huile (6),
**caractérisé en ce que**
les deux capteurs (11, 12) sont agencés pour déterminer la teneur en fluide de refroidissement dans le flux volumique d'huile respectif.

2. Cage de laminoir (1) selon la revendication 1, dans laquelle le premier et/ou le second capteur (11, 12) se présente sous la forme d'un capteur de viscosité, d'un capteur de conductivité, d'un capteur optique et/ou d'un capteur de densité.

3. Cage de laminoir (1) selon les revendications 1 ou 2, dans laquelle le système de lubrification par circulation d'huile (4) comporte un réservoir de stockage (7) avec un capteur de niveau (9).

4. Cage de laminoir (1) selon l'une des revendications précédentes, comprenant en outre un capteur de distance (14) permettant de déterminer la distance axiale entre une surface de référence (27), située du côté de la table de cylindre, d'une empoise (20), de préférence d'un canal annulaire (28) relié à l'empoise (20), et une surface frontale (29), disposée axialement à l'opposé de l'empoise (20), d'une table de cylindre, de préférence d'un anneau déflecteur (30) relié à la table de cylindre.

5. Cage de laminoir (1) selon l'une des revendications précédentes, comprenant en outre un troisième capteur (15) disposé à l'intérieur du système d'étanchéité, de préférence dans le palier à film d'huile (2) entre un joint côté huile et un joint côté fluide de refroidissement.

6. Cage de laminoir (1) selon l'une des revendications précédentes, comprenant en outre un capteur de niveau (16) disposé à l'intérieur du palier à film d'huile (2), au moyen duquel le niveau de remplissage de l'huile dans le carter d'huile peut être déterminé.

7. Cage de laminoir (1) selon l'une des revendications précédentes, dans laquelle le palier à film d'huile (2) comprend un dispositif de mesure qui permet de déterminer l'état, à l'intérieur du palier à film d'huile (2), d'au moins un, de préférence de chacun, des éléments choisis parmi le groupe comprenant la douille de tourillon (18), la bague d'épaulement de pression (22), l'unité de palier axial (23) et/ou le logement du palier axial (24).

8. Cage de laminoir (1) selon l'une des revendications précédentes, comprenant en outre un dispositif de mesure disposé dans la zone d'accouplement (13) de la conduite d'alimentation en huile (5) et/ou de la conduite d'évacuation d'huile (6), au moyen duquel le raccord d'accouplement peut être détecté.

9. Procédé permettant de détecter des impuretés d'une huile au moyen d'un fluide de refroidissement dans un palier à film d'huile (2) d'une cage de laminoir (1), le palier à film d'huile (2) présentant un système d'étanchéité permettant de rendre étanche le palier à film d'huile (2) par rapport à une sortie d'huile ainsi qu'à une entrée de fluide de refroidissement et étant intégré dans un système de lubrification par circulation d'huile (4) qui est en communication fluidique avec le palier à film d'huile (2) au moyen de conduites d'alimentation en huile (5) et de conduites d'évacuation d'huile (6), **caractérisé en ce qu'**au moyen d'un premier capteur (11) disposé dans la conduite d'alimentation en huile (5) et d'un second capteur (12) disposé dans la conduite d'évacuation d'huile (6), la teneur en fluide de refroidissement est déterminée dans le flux volumique d'huile respectif, étant de préférence transmise à un dispositif d'évaluation (10) et évaluée par celui-ci.

10. Procédé permettant de détecter des pertes d'huile dans un palier à film d'huile (2) d'une cage de laminoir (1), le palier à film d'huile (2) comportant un système d'étanchéité permettant de rendre le palier à film d'huile (2) étanche à une sortie d'huile ainsi qu'à une entrée de fluide de refroidissement et étant intégré dans un système de lubrification par circulation d'huile (4), qui comporte un réservoir de stockage (7) avec un capteur de niveau de remplissage (9) et qui est en communication fluidique avec le palier à film d'huile (2) au moyen de conduites d'alimentation en huile (5) et de conduites d'évacuation d'huile (6), la teneur en fluide de refroidissement dans le flux volumique d'huile respectif étant déterminée au moyen d'un premier capteur (11) disposé dans la conduite d'alimentation en huile (5) et un second capteur (12) disposé dans la conduite d'évacuation d'huile (6), et étant de préférence transmise à un dispositif d'évaluation (10) et évaluée par celui-ci.
